# EUROPEAN PATENT SPECIFICATION

(11) **EP 2 543 687 B1**
(45) Date of publication and mention of the grant of the patent: **15.01.2020**
(21) Application number: 11750634.5
(22) Date of filing: 01.03.2011
(51) Int. Cl.: C08G 59/24, B32B 15/08, C08J 5/24, C08K 3/00, C08L 63/10, C08G 59/50, C08G 59/40, C08G 59/62, B32B 27/04, B32B 27/38

(54) **RESIN COMPOSITION, PREPREG, AND LAMINATED SHEET**
HARZZUSAMMENSETZUNG, PREPREG UND LAMINIERTE FOLIE
COMPOSITION DE RÉSINE, PRÉIMPRÉGNÉ ET FEUILLE STRATIFIÉE

(30) Priority: 02.03.2010 JP 2010045625
(43) Date of publication of application: 09.01.2013
(73) Proprietor: Mitsubishi Gas Chemical Company, Inc., Tokyo 100-8324 (JP)
(72) Inventor: OGASHIWA, Takaaki, Tokyo 125-8601 (JP); TAKAHASHI, Hiroshi, Tokyo 125-8601 (JP); MIYAHIRA, Tetsuro, Tokyo 125-8601 (JP); UENO, Masayoshi, Tokyo 125-8601 (JP); KATO, Yoshihiro, Tokyo 125-8601 (JP)
(74) Representative: Hoffmann Eitle
(86) International application number: PCT/JP2011/054590
(87) International publication number: WO 2011/108524

(56) References cited:
- EP-A1- 1 961 554
- JP-A- 9 003 167
- JP-A- 11 124 487
- JP-A- 11 322 895
- JP-A- 2003 002 949
- JP-A- 2008 074 941
- JP-A- 2008 074 941
- JP-A- 2008 214 602
- JP-A- 2009 024 056
- JP-A- 2009 227 742
- US-A1- 2009 017 316

## Description

### Technical Field

The present invention relates to a resin composition and more specifically relates to a resin composition for use in prepregs for printed wiring boards, a prepreg comprising the resin composition impregnated into or coated on a base material, and a laminated sheet obtained by curing the prepreg.

### Background of the Invention

In recent years, there is an ever-increasing tendency towards high-density integration, high function, and high-density assembly of semiconductors extensively used, for example, in electronic equipments, communication instruments, and personal computers. This has led to a demand for better properties and higher reliability of laminated sheets for semiconductor plastic packages. Further, due to a growing interest in environmental problems, a laminated sheet having heat resistance high enough to be applicable to a reflow process at elevated temperatures has been demanded from the viewpoint of using lead-free solders.

Further, there is a recent demand for a reduction in coefficient of thermal expansion in a plane direction of laminated sheets. When the difference in coefficient of thermal expansion between a semiconductor element and a printed wiring board for a semiconductor plastic package is large, warpage occurs in the semiconductor plastic package due to the difference in coefficient of thermal expansion upon exposure to thermal shock, sometimes leading to poor connection between the semiconductor element and the printed wiring board for a semiconductor plastic package or between the semiconductor plastic package and the printied wiring board mounted.

Filling of inorganic fillers is known as a method for reducing the coefficient of thermal expansion in a plane direction of the laminated sheet. When the amount of the inorganic filler filled is large, the resultant resin composition is hard and brittle. This poses a problem that the frequency of replacement of drill bits is increased due to abrasion or breakage of drill bits, that is, the productivity is lowered, and, at the same time, the accuracy of hole position is lowered.

The incorporation of an organic filler having rubber elasticity in a varnish containing an epoxy resin is known effective for a reduction in thermal expansion in a plane direction (Patent documents 1 to 5). When this varnish is used, however, a bromine flame retardant is sometimes added to the varnish from the viewpoint of rendering the laminated sheet flame-retardant. This method sometimes increases environmental burden.

In order to solve this problem, a method is known in which a silicone rubber is used as a rubber elastic powder (patent document 6). Laminated sheets obtained using the varnish with the silicone rubber added thereto have an excellent coefficient of thermal expansion, but on the other hand, the drilling workability is unsatisfactory. Accordingly, lowering the coefficient of thermal expansion of the resin per se rather than lowering in coefficient of thermal expansion by the filler alone is demanded.

### PRIOR ART DOCUMENTS

### Patent Documents

Patent document 1 : Japanese Patent No. 3173332
Patent document 2 : Japanese Patent Application Laid-Open No. 48001/1996
Patent document 3 : Japanese Patent Application Laid-Open No. 2000-158589/2000
Patent document 4 : Japanese Patent Application Laid-Open No. 246849/2003
Patent document 5 : Japanese Patent Application Laid-Open No. 143973/2006
Patent document 6 : Japanese Patent Application Laid-Open No. 035728/2009

### [SUMMARY OF THE INVENTION]

The present inventors have now found that, in a resin composition comprising an epoxy resin, a maleimide compound, a curing agent, and an inorganic filler, the use of a specific epoxy resin, despite the fact that the content of the inorganic filler is substantially the same as that of the conventional resin composition for printed wiring boards, can realize a low coefficient of thermal expansion in a plane direction of a cured product of the resin composition and, at the same time, can realize excellent heat resistance and flame retardance. The present invention has been made based on such finding.

Accordingly, an object of the present invention is to provide a resin composition that, despite the fact that the content of an inorganic filler is on approximately the same level as that of the conventional resins, can realize a low coefficient of thermal expansion in a plane direction of a resin cured product and, at the same time, can realize excellent heat resistance and flame retardance. Another object of the present invention is to provide a prepreg comprising the resin composition impregnated into or coated onto a base material, and a laminated sheet prepared using the prepreg.

According to one aspect of the present invention, there is provided a resin composition comprising: an epoxy resin (A); a maleimide compound (B); a curing agent (C); and an inorganic filler (D),

wherein the curing agent (C) comprises a cyanate ester resin (C1), wherein the cyanate ester resin (C1) is contained in an amount that meets a requirement of CN/Ep of 0.7 to 2.5 wherein CN represents the number of cyanate ester groups in the cyanate ester resin (C1); and Ep represents the number of epoxy groups in the epoxy resin (A), the epoxy resin (A) being represented by formula (IV) or (V) as disclosed in the claims, wherein the epoxy resin (A) is contained in an amount of 5 to 60 parts by weight based on 100 parts by weight in total of the epoxy resin (A), the maleimide compound (B), and the curing agent (C).

According to another aspect of the present invention, there are provided a prepreg comprising the resin composition impregnated into or coated on a base material, a laminated sheet comprising a cured product of the prepreg, and a metal foil-clad laminated sheet comprising: a cured product of a stack of the prepreg; and a metal foil provided on the prepreg.

The laminated sheet prepared using the resin composition according to the present invention is advantageous in that, despite the fact that the content of the inorganic filler is on approximately the same level as that of the conventional resin, the coefficient of thermal expansion in a plane direction of a resin cured product is low and, at the same time, the heat resistance is excellent. Accordingly, the laminated sheet is suitable as materials for semiconductor packages, of which good productivity in terms of drilling workability is required. Further, the resin composition according to the present invention can realize high flame retardance despite the fact that neither a halogen compound nor a phosphorus compound is used.

### [DETAILED DESCRIPTION OF THE INVENTION]

The resin composition according to the present invention comprises an epoxy resin (A) having a structure represented by formula (IV) or (V), a maleimide compound (B), a curing agent (C), and an inorganic filler (D) as indispensable ingredients. Individual ingredients constituting the resin composition according to the present invention will be described.

### < Epoxy resin (A) >

The epoxy resin (A) used in the present invention is represented by formula (IV) or (V): 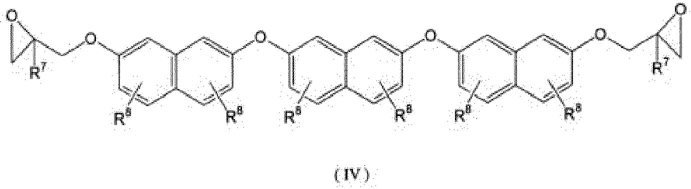 wherein R⁷ represents a hydrogen atom or a methyl group; and R⁸'s each independently represent a hydrogen atom, an alkyl group having 1 to 4 carbon atoms, an aralkyl group represented by formula (II) below, 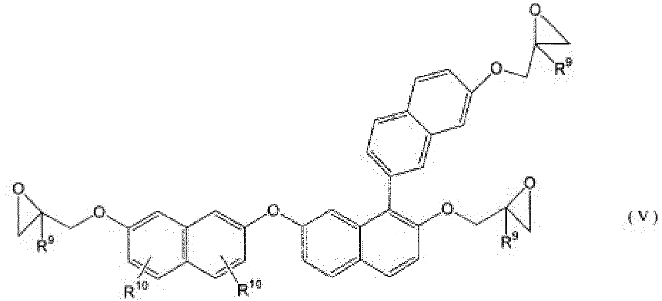 wherein R⁹ represents a hydrogen atom or a methyl group; and R¹⁰'s each independently represent a hydrogen atom, an alkyl group having 1 to 4 carbon atoms, or an aralkyl group represented by formula (II) below, 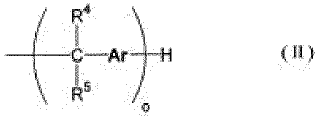 wherein R⁴ and R⁵ each independently represent a hydrogen atom or a methyl group; Ar represents a phenylene or naphthylene group, provided that 1 to 3 hydrogen atoms in the phenylene or naphthylene group are optionally nuclearly substituted by an alkyl group having 1 to 4 carbon atoms; and o represents a real number of 0.1 to 4 on average.

The epoxy resins may be commercially available products, and examples of suitable epoxy resins include EXA-7311 (manufactured by DIC).

In the present invention, an epoxy resin other than the epoxy resin represented by formula (IV) or (V) may be contained. From the viewpoint of a recent growing interest in environmental problems, non-halogen epoxy resins may be used as epoxy resins usable in combination with epoxy resins represented by formula (IV) or (V). Examples of such non-halogen epoxy resins include, but are not limited to, bisphenol A epoxy resins, bisphneol F epoxy resins, phenol novolak epoxy resins, cresol novolak epoxy resins, bisphenol A novolak epoxy resins, trifunctional phenol epoxy resins, tetrafunctional phenol epoxy resins, naphthalene epoxy resin, biphenyl epoxy resins, aralkyl novolak epoxy resins, alicyclic epoxy resins, polyol epoxy resins, compounds obtained by epoxidizing a double bond, for example, in glycidylamines, glycidyl esters, and butadiene, and compounds obtained by reacting hydroxyl-containing silicone resins with epichlorohydrin. The non-halogen epoxy resins may be used solely or in a combination of two or more of them.

Among the non-halogen epoxy resins, aralkyl novolak epoxy resins represented by formula (VIII) are preferred particularly from the viewpoint of improving flame retardance. Preferred aralkyl novolak epoxy resins include, but are not limited to, phenol phenyl aralkyl epoxy resins, phenol biphenyl aralkyl epoxy resins, and naphthol aralkyl epoxy resins. 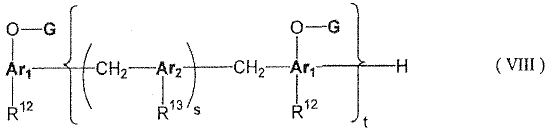 wherein Ar₁ and Ar₂ each independently represent an aryl group that optionally has, as a substituent, a monocyclic or polycyclic aromatic hydrocarbon group selected from the group consisting of phenyl, naphthyl, and biphenyl groups; Rx and Ry each independently represent a hydrogen atom, an alkyl group, or an aryl group; G represents a glycidyl group; m is an integer of 1 to 5; and n is an integer of 1 to 50.

Further, depending upon applications where the resin composition is used, phosphorus-containing epoxy resins or brominated epoxy resins may be used in combination with the epoxy resin represented by formula (I). Any bromine atom-containing compound having two or more epoxy groups per molecule may be used as the brominated epoxy resin without particular limitation. Preferred brominated epoxy resins include brominated bisphenol A epoxy resins and brominated phenol novolak epoxy resins.

The content of the epoxy resin (A) is approximately 5 to 60 parts by weight, particularly preferably 10 to 40 parts by weight, based on 100 parts by weight in total of the epoxy resin (A), the maleimide compound (B), and the curing agent (C).

### < Maleimide compound (B) >

Any compound having one or more maleimide groups per molecule may be used as the maleimide compound (B) in the present invention without particular limitation. Examples thereof include, but are not limited to, N-phenylmaleimide, N-hydroxyphenylmaleimide, bis(4-maleimidophenyl)methane, 2,2-bis{4-(4-maleimidophenoxy)-phenyl}propane, bis(3,5-dimethyl-4-maleimidophenyl) methane, bis(3-ethyl-5-methyl-4-maleimidophenyl)methane, bis(3,5-diethyl-4-maleimidophenyl)methane, polyphenylmethane maleimide, prepolymers of these maleimide compounds, or prepolymers of maleimide compounds and amine compounds. The maleimide compounds may be used solely or in a combination of two or more of them. Among them, bis(4-maleimidophenyl)methane, 2,2-bis{4-(4-maleimidophenoxy)-phenyl}propane, and bis(3-ethyl-5-methyl-4-maleimidophenyl)methane are preferred.

The content of the maleimide compound (B) is preferably approximately 3 to 50 parts by weight, particularly preferably 5 to 30 parts by weight, based on 100 parts by weight in total of the epoxy resin (A), the maleimide compound (B), and the curing agent (C).

### < Curing agent (C) >

In the present invention, any curing agent that is commonly used for epoxy resin curing purposes may be used as the curing agent (C) provided that the curing agent (C) comprises a cyanate ester (C1). Among others, cyanate ester resins (C1) that are excellent in heat resistance and especially electric characteristics such as dielectric constant and dielectric loss tangent, and phenolic resins (C2) that have low water absorption and high heat resistance are suitable for use.

Any common publicly known cyanate ester resin may be used as the cyanate ester resin (C1) that functions as the curing agent in the present invention without particular limitation. Examples thereof include, but are not limited to, 1,3-dicyanatobenzene, 1,4-dicyanatobenzene, 1,3,5-tricyanatobenzene, bis(3,5-dimethyl-4-cyanatophenyl)methane, 1,3-dicyanatonahthalene, 1,4-dicyanatonahthalene, 1,6-dicyanatonahthalene, 1,8-dicyanatonahthalene, 2,6-dicyanatonahthalene, 2,7-dicyanatonahthalene, 1,3,6-tricyanatonahthalene, 4,4'-dicyanatobiphenyl, bis(4-cyanatophenyl)methane, 2,2'-bis(4-cyanatophenyl)propane, bis(4-cyanatophenyl)ether, bis(4-cyanatophenyl)thioether, bis(4-cyanatophenyl)sulfone, 2,2'-bis(4-cyanatophenyl)propane, bis(3,5-dimethyl, 4-cyanatophenyl)methane, and phenol novolak cyanate esters. The cyanate ester resins may be used solely or in a combination of two or more of them.

In the present invention, naphthol aralkyl cyanate ester resins represented by formula (VI) are particularly suitable for use as the cyanate ester resin from the viewpoint of enhancing the flame retardance of the resin composition. 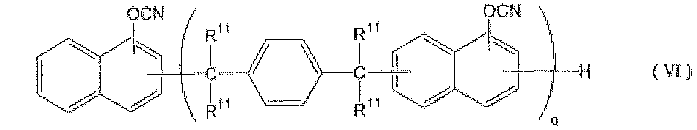 wherein R¹¹ represents a hydrogen atom or a methyl group; and q is an integer of 1 or more.

In the resin composition containing the naphthol aralkyl cyanate ester, the resin skeleton is more rigid. Accordingly, while maintaining the heat resistance, the water absorption and heat resistance are improved and, at the same time, the curability is improved by virtue of a reduction in factors for reaction inhibition.

The cyanate ester resin (C1) is added to the resin composition so that the ratio between the number of cyanate groups in the cyanate ester resin and the number of epoxy groups in the epoxy resin (A), i.e., CN/Ep, is in the range of 0.7 to 2.5. When CN/Ep is less than 0.7, the flame retardance of the laminated sheet is lowered while, when CN/Ep is more than 2.5, the heat resistance and the like are lowered. The cyanate ester which is a curing agent may be added as a bismaleimide triazine resin which is a prepolymerization product of the cyanate ester with the maleimide compound.

Any resin having two or more phenolic hydroxyl groups per molecule may be adopted as the phenolic resin (C2) that is used as the curing agent in the present invention without particular limitation. Examples thereof include compunds in which two or more hydrogen atoms bound to the aromatic ring per molecule are substituted by a hydroxyl group, for example, phenol novolak resins, alkyl phenol novolak resins, bisphenol A novolak resins, dicyclopentadiene phenol resins, Xylok phenol resins, terpene-modified phenol resins, polyvinyl phenols, and aralkyl phenol resins. The phenol resins may be used solely or in a combination of two or more of them.

In the present invention, naphthol aralkyl resins represented by formula (VII) are particularly suitable for use as the phenolic resin (C2) from the viewpoints of improving low water absorption and high heat resistance of the resin composition. 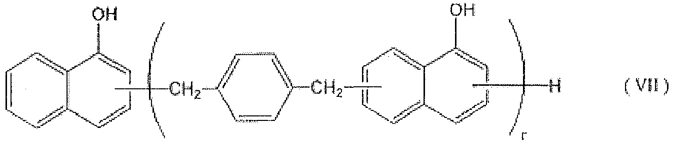 wherein r is an integer of 1 or more.

In the resin composition containing the naphthol aralkyl resin, the resin skeleton has a more rigid strucure and, thus, the water absorption can be further improved while maintaining the heat resistance.

When the phenolic resin (C2) is used as the curing agent (C), preferably, the curing agent is added to the resin composition so that the ratio between the number of phenol groups in the phenol resin and the number of epoxy groups in the epoxy resin (A), i.e., OH/Ep, is in the range of 0.7 to 2.5. When OH/Ep is less than 0.7, the glass transition temperature is lowered. On the other hand, when OH/Ep is more than 2.5, the flame retardance is sometimes lowered. The phenolic resin which is the curing agent may be used in combination with the cyanate ester resin or a bismaleimide triazine resin obtained by prepolymerizing a cyanate ester with a maleimide compound.

### < Inorganic filler (D) >

Any inorganic filler commonly used in resin compositions for electrical wiring boards may be used as the inorganic filler (D) in the present invention without particular limitation. Examples thereof include, but are not limited to, silicas such as naturally occurring silica, fused silica, amorphous silica, and hollow silica, molybdenum compounds such as boehmite, molybdenum oxide, and zinc molybdate, alumina, talc, calcined talc, mica, glass short fibers, and spherical glass (for example finely divided glass such as E-glass, T-glass, and D-glass). The inorganic fillers may be used solely or in a combination of two or more of them.

Preferably, the inorganic filler (D) has a mean particle diameter (D50) of 0.2 to 5 µm from the viewpoint of dispersibility. D50 means a median diameter and is a diameter at which, when the particle size distribution of the measured powder is divided into two parts, the amount of the particles having a larger particle side is equal to the amount of the particles having a smaller particle side. The D50 value of the inorganic filler is generally measured by a wet laser diffraction scattering method.

The content of the inorganic filler (D) is preferably 50 to 200 parts by weight, more preferably 80 to 150 parts by weight, based on 100 parts by weight in total of the epoxy resin (A), the maleimide compound (B), and the curing agent (C). The amount of the inorganic filler incorporated is below the lower limit of the above-defined range, the level of thermal expansion is increased. On the other hand, when the amount of the inorganic filler incorporated is above the upper limit of the above-defined range, the moldability and the drilling workability are sometimes deteriorated.

The inorganic filler (D) may be added solely to the resin composition, or alternatively may be added in combination with silane coupling agents and wetting/dispersing agents. Any silane coupling agent commonly used for surface treatment of inorganic materials may be used without particular limitation. Examples of such silane coupling agents include, but are not limited to, aminosilane coupling agents such as γ-aminopropyltriethoxysilane and N-β-(aminoethyl)-γ-aminopropyltrimethoxysilane, epoxysilane coupling agents such as γ-glycidoxypropyltrimethoxysilane, vinylsilane coupling agents such as γ-methacryloxypropyltrimethoxysilane, cationic silane coupling agents such as N-β-(N-vinylbenzylaminoethyl)-γ-aminopropyltrimethoxysilane hydrochloride, and phenylsilane coupling agents. The silane coupling agents may be used solely or in a combination of two or more of them.

Any dispersion stabilizer commonly used for coating materials may be used as the wetting/dispersing agent without particular limitation. The dispersion stabilizers may be commercially available products. Examples of suitable dispersion stabilizers include Disperbyk-110, 111, 180, 161, BYK-W996, W9010, and W903 manufactured by BYK Japan K.K.

### < Other ingredients >

In addition to the above ingredients, if necessary other ingredients may be contained in the resin composition according to the present invention. For example, curing accelerators may be contained for proper curing speed adjustment purposes. Any curing accelerator commonly used as curing accelerators for epoxy resins, cyanate ester resins, phenolic resins and the like may be used without particular limitation. Examples thereof include, but are not limited to, organometal salts of copper, zinc, cobalt, nickel and the like, imidazoles and derivatives thereof, and tertiary amines. The curing accelerators may be used solely or in a proper combination of two or more of them.

The resin composition may if necessary contain a silicone-composited powder. The silicone-composited powder is that the surface of finely divided powder particles of an addition polymerization product of a vinyl group-containing dimethylpolysiloxane with methylhydrogen polysiloxane has been coated with a silicone resin to improve the dispersibility. Preferably, the silicone-composited powder has a mean particle diameter (D50) in the range of 1 to 15 µm from the viewpoint of dispersibility. The content of the silicone-composited powder is preferably not more than 30 parts by weight, particularly preferably 5 to 25 parts by weight, based on 100 parts by weight in total of the epoxy resin (A), the maleimide compound (B), and the curing agent (C). When the content of the silicone-composited powder added is above the upper limit of the above-defined range, the moldability is sometimes lowered.

The resin composition may if necessary contain silicone resin powders as an auxiliary flame-retardant. The silicone resin powder is formed of polymethylsilsesquioxane in which a siloxane bond has been crosslinked in a three-dimensional network form. The content of the silicone resin powder is preferably not more than 30 parts by weight, particularly preferably not more than 25 parts by weight, based on 100 parts by weight in total of the epoxy resin (A), the maleimide compound (B), and the curing agent (C). When the content of the silicone-composited powder added is above the upper limit of the above-defined range, the moldability is sometimes lowered.

In the resin composition according to the present invention, for example, various polymeric compounds such as other heat-curable resins, thermoplastic resins, and oligomers or elastomers thereof, and other flame-retardant compounds and additives may be added in such an amount that does not sacrifice desired properties of the resin composition. Any of them that are commonly used in resin compositions for printed wiring boards may be used without particular limitation. Examples of flame-retardant compounds include nitrogen-containing compounds such as melamine and benzoguanamine and oxazine ring-containing compounds. Additives include, for example, ultraviolet absorbers, antioxidants, photopolymerization initiators, fluorescent brightener, photosensitizers, dyes, pigments, thickeners, lubricants, antifoaming agents, dispersants, leveling agents, brightener, and polymerization initiators. These additives may be used solely or in a proper combination of two or more of them according to need.

### < Prepreg >

The prepreg according to the present invention comprises the resin composition impregnated into or coated on a base material. Publicly known base materials used in various materials for printed wiring boards may be used. Examples thereof include glass fibers such as E-glass, D-glass, S-glass, NE-glass, T-glass, and Q-glass fibers, inorganic fibers other than the glass fibers, or organic fibers such as polyimide, polyamide, and polyester fibers. These base materials may be properly selected depending upon contemplated applications and properties. Among them, E-glass fibers are more preferred from the viewpoint of an excellent balance between the coefficient of thermal expansion in a plane direction and the drilling workability.

The form of the base material is not particularly limited as long as the base material can be impregnated or coated with the resin composition. Examples thereof include woven fabrics, nonwoven fabrics, rovings, chopped strand mats, and surfacing mats. The thickness of the base material is approximately 0.01 to 0.30 mm but is not limited to this thickness range.

The prepreg according to the present invention may be produced by impregnating or coating the base material with the resin composition. For example, the prepreg may be produced by impregnating or coating the base material with a resin varnish comprising the resin composition and an organic solvent and heating the impregnated or coated base material in a drier of 100 to 200°C for 1 to 60 min to semi-cure the resin. The amount of the resin composition (including the inorganic filler) deposited on the base material is preferably in the range of 20 to 90% by weight based on the whole prepreg.

The organic solvent is used to lower the viscosity of the resin composition, improve the handleability, and, at the same time, enhance impregnation of the resin composition into the glass cloth. Any organic solvent may be used in the resin varnish without particular limitation as long as the epoxy resin (A), the maleimide compound (B), and the curing agent (C) can be dissolved therein. Examples thereof include, but are not limited to, ketones such as acetone, methyl ethyl ketone, methyl isobutyl ketone, and cyclohexanone, aromatic hydrocarbons such as benzene, toluene, and xylene, and amides such as dimethylformamide and diemthylacetamide. One of or a proper combination of two or more of these organic solvents may be used.

### < Laminated sheet >

The laminated sheet according to the present invention comprises a molded (cured) product of the prepreg or a stack of a plurality of sheets of the prepreg. The laminated sheet is produced by providing a single sheet of the prepreg or a stack of a plurality of sheets of the prepreg, optionally placing a metal foil of copper or aluminum provided on one surface or both surfaces of the single prepareg or the stack, and subjecting the assembly to molding (curing). Any metal foil used in materials for printed wiring boards may be used without particular limitation. Techniques for conventional laminated sheets for printing wiring boards or multilayered boards may be adopted in the lamination molding. For example, the lamination molding is generally carried out under conditions of the use of a multistage press, a multistage vacuum press, continuous molding, an autoclave molding machine or the like, a temperature of 100 to 300°C, a pressure of 2 to 100kgf/cm², and a heating time of 0.05 to 5 hr. Further, in the present invention, a multilayered board can be formed by lamination molding of a combination of the prepreg with a separately provided wiring board for an internal layer.

### [EXAMPLES]

The present invention is further illustrated by the following Examples. However, the present invention is not to be construed as being limited to these Examples.

### < Synthesis Example 1 >

### Synthesis of α-naphthol aralkyl cyanate ester resin

A reactor equipped with a thermometer, a stirrer, a dropping funnel, and a reflux condenser was preliminarily cooled with brine to 0 to 5°C. Cyanogen chloride (7.47 g, 0.122 mol), 9.75 g (0.0935 mol) of 35% hydrochloric acid, 76 ml of water, and 44 ml of methylene chloride were charged into the reactor. The temperature within the reactor and pH were kept at -5 to +5°C and 1 or less, respectively, and, while stirring, a solution of 20 g (0.0935 mol) of α-naphthol aralkyl (compound of formula (VII); SN: 485, OH group equivalent: 214 g/eq., softening point: 86°C, manufactured by Nippon Steel Chemical Co., Ltd.), and 14.16 g (0.14 mol) of triethylamine dissolved in 92 ml of methylene chloride was added dropwise to the contents in the reactor through a dropping funnel over a time period of one hr. After the completion of the dropwise addition, 4.72 g (0.047 mol) of triethylamine was added dropwise thereto over a time period of 15 min.

After the completion of the dropwise addition of the triethylamine, the mixture was stirred at the same temperature for 15 min, followed by separation of the reaction solution to obtain an organic layer. The organic layer was washed twice with 100 ml of water. Methylene chloride was removed by distillation under the reduced pressure with an evaporator, and the residue was finally concentrated to dryness at 80°C for one hr to obtain 23.5 g of an α-naphthol aralkyl cyanate ester resin represented by formula (IX): 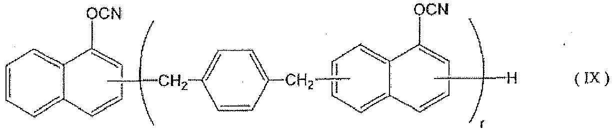 wherein r is an integer of 1 or more.

The cyanate ester resin thus obtained was analyzed by liquid chromatography and an IR spectrum. As a result, peaks attributable to starting materials were not detected. Further, the structure of the cyanate ester resin was identified by 13C-NMR and 1H-NMR. As a result, it was found that the conversion of OH group to OCN group was not less than 99%. The cyanate equivalent of the cyanate ester resin obtained above was 261 g/eq.

### < Synthesis Example 2 >

### Synthesis of bismaleimide triazine resin

2,2-Bis(4-cynatophenyl)propane (CX: manufactured by Mitsubishi Gas Chemical Co., Inc.) (75 parts by weight) and 25 parts by weight of bis(3-ethyl-5-methyl-4-maleimidephenyl)methane (BMI-70: manufactured by K.I. Kasei K.K.) were mixed together, and the mixture was melt and stirred at 150°C. A reaction was allowed to proceed until the viscosity of the mixture became 12 poises. The mixture was dissolved in methyl ethyl ketone to obtain a bismaleimide triazine resin. The cyanate equivalent of the bismaleimide triazine resin was 185 g/eq.

### Example 1

The α-naphthol aralkyl cyanate ester resin obtained in Synthesis Example 1 (50 parts by weight), 10 parts by weight of bis(3-ethyl-5-methyl-4maleimidophenyl)methane (BMI-70, manufactured by K.I. Kasei K.K.), and 40 parts by weight of a polyoxynaphthylene epoxy resin (EXA-7311, epoxy equivalent: 277 g/eq., manufactured by DIC) were mixed together, and the mixture was dissolved in methyl ethyl ketone. A wetting/dispersing agent (disperbyk-161, manufactured by Bik-Chemie Japan K.K.) (3 parts by weight), 120 parts by weight of spherical fused silica particles (SC2050MB, manufactured by Admatex), 10 parts by weight of a silicone resin powder (Tospearl 120, manufactured by Momentive Performance Materials Japan LLC), and 0.02 part by weight of zinc ocylate were mixed together to obtain a varnish. The resultant varnish was diluted with methyl ethyl ketone. The diluted varnish was impregnated into and coated on a 0.1 mm-thick E-glass woven fabric. The impregnated and coated E-glass woven fabric was heat-dried at 160°C for 4 min to obtain a prepreg having a resin content of 50% by weight.

### Example 2

The bismaleimide triazine resin obtained in Synthesis Example 2 (45 parts by weight), 40 parts by weight of a polyoxynaphthylene epoxy resin (EXA-7311, epoxy equivalent: 277 g/eq., manufactured by DIC), and 15 parts by weight of a phenol biphenyl aralkyl epoxy resin (NC-3000-FH, epoxy equivalent:320 g/eq., manufactured by Nippon Kayaku Co., Ltd.) were mixed together, and the mixture was dissolved in methyl ethyl ketone. A wetting/dispersing agent (disperbyk-w903, manufactured by Bik-Chemie Japan K.K.)(2 parts by weight of), 10 parts by weight of talc coated with zinc molybdate (ChemGuard 911C, amount of zinc molybdate supported: 10% by weight, manufactured by Sherwin-Williams Chemicals), 120 parts by weight of spherical fused silica particles (SC2050MR, manufactured by Admatex), and 0.02 part by weight of zinc octylate were mixed into the soluiton to prepare a varnish. The varnish thus obtained was diluted with methyl ethyl ketone. The diluted varnish was impregnated into and coated on a 0.1 mm-thick E-glass woven fabric. The impregnated and coated E-glass woven fabric was heat-dried at 160°C for 4 min to obtain a prepreg having a resin content of 50% by weight.

### Example 3

The bismaleimide triazine resin obtained in Synthesis Example 2 (45 parts by weight), 10 parts by weight of the α-naphthol aralkyl cyanate ester resin obtained in Synthesis Example 1, 40 parts by weight of a polyoxynaphthylene epoxy resin (EXA-7311, epoxy equivalent: 277 g/eq., manufactured by DIC), 5 parts by weight of a phenol novolak epoxy resin (N770, epoxy equivalent: 190 g/eq., manufactured by DIC), 10 parts by weight of talc coated with zinc molybdate (ChemGuard 911C, amount of zinc molybdate supported: 10% by weight, manufactured by Sherwin-Williams Chemicals), 120 parts by weight of spherical fused silica particles (SC2050MB, manufactured by Admatex), and 0.02 part by weight of zinc octylate were mixed together to prepare a varnish. The varnish thus obtained was diluted with methyl ethyl ketone. The diluted varnish was impregnated into and coated on a 0.1 mm-thick E-glass woven fabric. The impregnated and coated E-glass woven fabric was heat-dried at 160°C for 4 min to obtain a prepreg having a resin content of 50% by weight.

### Example 4

The bismaleimide triazine resin obtained in Synthesis Example 2 (45 parts by weight), 10 parts by weight of a prepolymer of 2,2-bis(4-cyanatophenyl)propane (CA210: cyanato equivalent 139, manufactured by Mitsubishi Gas Chemical Co., Inc.), 40 parts by weight of a polyoxynaphthylene epoxy resin (EXA-7311, epoxy equivalent: 277 g/eq., manufactured by DIC), and 5 parts by weight of a phenol biphenyl aralkyl epoxy resin (NC-3000-FH, epoxy equivalent: 320 g/eq., manufactured by Nippon Kayaku Co., Ltd.) were mixed together. Talc coated with zinc molybdate (ChemGuard 911C, amount of zinc molybdate supported: 10% by weight, manufactured by Sherwin-Williams Chemicals) (10 parts by weight), 30 parts by weight of a silicone rubber powder having a surface coated with a silicone resin (silicone-composited powder KMP-600, manufactured by The Shin-Etsu Chemical Co., Ltd.), 60 parts by weight of spherical fused silica particles (SC2050MB, manufactured by Admatex), and 0.02 part by weight of zinc octylate were mixed into the mixed solution to prepare a varnish. The varnish thus obtained was diluted with methyl ethyl ketone. The diluted varnish was impregnated into and coated on a 0.1 mm-thick T-glass cloth, and the impregnated and coated T-glass cloth was heat-dried at 160°C for 4 min to obtain a prepreg having a resin content of 50% by weight.

### Example 5

α-Naphthol aralkyl cyanate ester resin obtained in Synthesis Example 1 (50 parts by weight), 10 parts by weight of bis(3-ethyl-5-methyl-4maleimidophenyl)methane (BMI-70, manufactured by K.I. Kasei K.K.), and 40 parts by weight of polyoxynaphthylene epoxy resin (EXA-7311, epoxy equivalent: 277 g/eq., manufactured by DIC) were mixed together, and the mixture was dissolved in methyl ethyl ketone. Spherical fused silica particles (SC2050MB, manufactured by Admatex) (90 parts by weight), 10 parts by weight of a silicone resin powder (Tospearl120, manufactured by Momentive Performance Materials Japan LLC), 15 parts by weight of a silicone rubber powder having a surface coated with a silicone resin (silicone-composited powder KMP-600, manufactured by The Shin-Etsu Chemical Co., Ltd.), and 0.05 part by weight of zinc octylate were mixed into the solution to prepare a varnish. The varnish thus obtained was diluted with methyl ethyl ketone. The diluted varnish was impregnated into and coated on a 0.1 mm-thick E-glass woven fabric, and the impregnated and coated woven fabric was heat-dried at 160°C for 4 min to obtain a prepareg having a resin content of 50% by weight.

### Example 6

The α-naphthol aralkyl cyanate ester resin obtained in Synthesis Example 1 (35 parts by weight), 10 parts by weight of a biphenyl aralkyl phenol resin (KAYAHARD GPH-103, manufactured by Nippon Kayaku Co., Ltd., hydroxyl equivalent: 231 g/eq.), 10 parts by weight of bis(3-ethyl-5-methyl-4maleimidophenyl)methane (BMI-70, manufactured by K.I. Kasei K.K.), and 45 parts by weight of a polyoxynaphthylene epoxy resin (EXA-7311, epoxy equivalent: 277 g/eq., manufactured by DIC) were mixed together, and the mixture was dissolved in methyl ethyl ketone. A wetting/dispersing agent (disperbyk-161, manufactured by Bik-Chemie Japan K.K.) (3 parts by weight), 120 parts by weight of spherical fused silica particles (SC2500-SQ, manufactured by Admatex), and 0.05 part by weight of zinc octylate were then mixed into the solution to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to obtain a prepreg having a resin content of 50% by weight.

### Example 7

The α-naphthol aralkyl cyanate ester resin obtained in Synthesis Example 1 (35 parts by weight), 10 parts by weight of a naphthol aralkyl resin (SN-495, hydroxyl equivalent: 236 g/eq., manufactured by Nippon Steel Chemical Co., Ltd.), 10 parts by weight of bis(3-ethyl-5-methyl-4maleimidophenyl)methane (BMI-70, manufactured by K.I. Kasei K.K.), and 45 parts by weight of a polyoxynaphthylene epoxy resin (EXA-7311, epoxy equivalent:277 g/eq., manufactured by DIC) were mixed together, and the mixture was dissolved in methyl ethyl ketone. A wetting/dispersing agent (disperbyk-161, manufactured by Bik-Chemie Japan K.K.) (3 parts by weight), 120 parts by weight of spherical fused silica particles (SC2500-SQ, manufactured by Admatex), and 0.05 part by weight of zinc octylate were then mixed into the solution to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to obtain a prepareg having a resin content of 50% by weight.

### Example 8

The α-naphthol aralkyl cyanate ester resin obtained in Synthesis Example 1 (40 parts by weight), 10 parts by weight of bis(3-ethyl-5-methyl-4maleimidophenyl)methane (BMI-70, manufactured by K.I. Kasei K.K.), 10 parts by weight of a naphthalene skeleton phenol resin (EPICLON EXB-9500, hydroxyl equivalent:153 g/eq., manufactured by DIC), and 45 parts by weight of a polyoxynaphthylene epoxy resin (EXA-7311, epoxy equivalent:277 g/eq., manufactured by DIC) were mixed together, and the mixture was dissolved in methyl ethyl ketone. A wetting/dispersing agent (disperbyk-161, manufactured by Bik-Chemie Japan K.K.) (1 part by weight), 120 parts by weight of spherical fused silica particles (SC2500-SQ, manufactured by Admatex), 10 parts by weight of a silicone resin powder (Tospearl120, manufactured by Momentive Performance Materials Japan LLC), and 0.05 part by weight of zinc octylate were then mixed into the solution to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to prepare a prepareg having a resin content of 50% by weight.

### Example 9 (not according to the invention)

A naphthol aralkyl resin (SN-495, hydroxyl equivalent: 236 g/eq., manufactured by Nippon Steel Chemical Co., Ltd.) (40 parts by weight), 20 parts by weight of bis(3-ethyl-5-methyl-4maleimidophenyl)methane (BMI-70, manufactured by K.I. Kasei K.K.), 40 parts by weight of a polyoxynaphthylene epoxy resin (EXA-7311, epoxy equivalent: 277 g/eq., manufactured by DIC), 3 parts by weight of a wetting/dispersing agent (disperbyk-w903, manufactured by Bik-Chemie Japan K.K.), 80 parts by weight of spherical fused silica particles (SC2500-SQ, manufactured by Admatex), 10 parts by weight of silicone resin powder (Tospearl120, manufactured by Momentive Performance Materials Japan LLC), 15 parts by weight of a silicone rubber powder having a surface coated with a silicone resin (silicone-composited powder KMP-600, manufactured by The Shin-Etsu Chemical Co., Ltd.), and 0.03 part by weight of imidazole (2P4MZ, manufactured by SHIKOKU CHEMICALS CORPORATION) were mixed together to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to obtain a prepareg having a resin content of 50% by weight.

### Example 10 (not according to the invention)

A phenyl aralkyl phenol resin (KAYAHARD GPH-103, hydroxyl equivalent: 231 g/eq., manufactured by Nippon Kayaku Co., Ltd.) (30 parts by weight), 10 parts by weight of an aminotriazine novolak resin (PHENOLITE LA-3018-50P, hydroxyl equivalent: 151 g/eq., manufactured by DIC), 10 parts by weight of bis(3-ethyl-5-methyl-4maleimidophenyl)methane (BMI-70, manufactured by K.I. Kasei K.K.), 50 parts by weight of a polyoxynaphthylene epoxy resin (EXA-7311, epoxy equivalent: 277 g/eq., manufactured by DIC), 1 part by weight of a wetting/dispersing agent (disperbyk-161, manufactured by Bik-Chemie Japan K.K.), 100 parts by weight of spherical fused silica particles (SC2500-SQ, manufactured by Admatex), and 0.03 part by weight of imidazole (2E4MZ, manufactured by SHIKOKU CHEMICALS CORPORATION) were mixed together to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to obtain a prepareg having a resin content of 50% by weight.

### Example 11 (not according to the invention)

A cresol novolak phenol resin (KA-1165, hydroxyl equivalent: 119 g/eq., manufactured by DIC) (20 parts by weight), 10 parts by weight of an aminotriazine novolak resin (PHENOLITE LA-3018-50P, hydroxyl equivalent: 151 g/eq., manufactured by DIC), 10 parts by weight of bis(3-ethyl-5-methyl-4maleimidophenyl)methane (BMI-70, manufactured by K.I. Kasei K.K.), 40 parts by weight of a polyoxynaphthylene epoxy resin (EXA-7311, epoxy equivalent: 277 g/eq., manufactured by DIC), 20 parts by weight of a phenol biphenyl aralkyl epoxy resin (NC-3000-FH, epoxy equivalent: 320 g/eq., manufactured by Nippon Kayaku Co., Ltd.), 1 part by weight of a wetting/dispersing agent (disperbyk-161, manufactured by Bik-Chemie Japan K.K.), 100 parts by weight of spherical fused silica particles (SC2500-SQ, manufactured by Admatex), 10 parts by weight of a silicone resin powder (Tospearl120, manufactured by Momentive Performance Materials Japan LLC), 10 parts by weight of a silicone rubber powder having a surface coated with a silicone resin (silicone-composited powder KMP-600, manufactured by The Shin-Etsu Chemical Co., Ltd.), and 0.02 part by weight of imidazole (2E4MZ, manufactured by SHIKOKU CHEMICALS CORPORATION) were mixed together to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to obtain a prepareg having a resin content of 50% by weight.

### Example 12 (not according to the invention)

A naphthalene skeleton phenol resin (EPICLON EXB-9500, hydroxyl equivalent: 153 g/eq., manufactured by DIC) (30 parts by weight), 10 parts by weight of an aminotriazine novolak resin (PHENOLITE LA-3018-50P, hydroxyl equivalent: 151 g/eq., manufactured by DIC), 10 parts by weight of bis(3-ethyl-5-methyl-4maleimidophenyl)methane (BMI-70, manufactured by K.I. Kasei K.K.), 40 parts by weight of a polyoxynaphthylene epoxy resin (EXA-7311, epoxy equivalent:277 g/eq., manufactured by DIC), 10 parts by weight of a phenol biphenyl aralkyl epoxy resin (NC-3000-FH, epoxy equivalent:320 g/eq., manufactured by Nippon Kayaku Co., Ltd.), 1 part by weight of a wetting/dispersing agent (disperbyk-161, manufactured by Bik-Chemie Japan K.K.), 80 parts by weight of spherical fused silica particles (SC2500-SQ, manufactured by Admatex), 10 parts by weight of a silicone resin powder (Tospearl120, manufactured by Momentive Performance Materials Japan LLC), 15 parts by weight of a silicone rubber powder having a surface coated with a silicone resin (silicone-composited powder KMP-600, manufactured by The Shin-Etsu Chemical Co., Ltd.), and 0.02 part by weight of imidazole (2E4MZ, manufactured by SHIKOKU CHEMICALS CORPORATION) were mixed together to prepare a varnish. The varnish thus obtained was diluted with methyl ethyl ketone. The diluted varnish was impregnated into and coated on a 0.1 mm-thick E-glass woven fabric, and the impregnated and coated E-glass woven fabric was heat-dried at 160°C for 4 min to obtain a prepareg having a resin content of 50% by weight.

### Comparative Example 1

A prepreg was obtained in the same manner in Example 1, except that a phenol biphenyl aralkyl epoxy resin (NC-3000-FH, epoxy equivalent: 320 g/eq., manufactured by Nippon Kayaku Co., Ltd.) was used instead of the polyoxynaphthylene epoxy resin used in Example 1.

### Comparative Example 2

A prepreg was obtained in the same manner in Example 1, except that a phenol novolak epoxy resin (N770, epoxy equivalent: 190 g/eq., manufactured by DIC) was used instead of the polyoxynaphthylene epoxy resin used in Example 1.

### Comparative Example 3

A prepreg was obtained in the same manner in Example 1, except that a phenol biphenyl aralkyl epoxy resin (NC-3000-FH, epoxy equivalent: 320 g/eq., manufactured by Nippon Kayaku Co., Ltd.) was used instead of the bis(3-ethyl-5-methyl-4maleimidophenyl)methane used in Example 1.

### Comparative Example 4

A prepreg was obtained in the same manner in Example 1, except that a phenol biphenyl aralkyl epoxy resin (NC-3000-FH,epoxy equivalent: 320 g/eq., manufactured by Nippon Kayaku Co., Ltd.) was used instead of the polyoxynaphthylene epoxy resin used in Example 1 and the spherical fused silica particles were not added.

### Comparative Example 5

A prepreg was obtained in the same manner in Example 1, except that 40 parts by weight of a phenol biphenyl aralkyl epoxy resin (NC-3000-FH, epoxy equivalent: 320 g/eq., manufactured by Nippon Kayaku Co., Ltd.) was used instead of the polyoxynaphthylene epoxy resin used in Example 1 and the addition amount of the spherical fused silica particles was changed from 120 parts by weight to 250 parts by weight.

### Comparative Example 6

A prepreg was obtained in the same manner in Example 1, except that a phenol biphenyl aralkyl epoxy resin (NC-3000-FH,epoxy equivalent:320 g/eq., manufactured by Nippon Kayaku Co., Ltd.) was used instead of the polyoxynaphthylene epoxy resin used in Example 1 and the addition amount of the spherical fused silica particles was changed from 120 parts by weight to 200 parts by weight.

### Comparative Example 7

A prepreg was obtained in the same manner in Example 1, except that a phenol biphenyl aralkyl epoxy resin (NC-3000-FH, epoxy equivalent: 320 g/eq., manufactured by Nippon Kayaku Co., Ltd.) was used instead of the polyoxynaphthylene epoxy resin used in Example 1 and the addition amount of the spherical fused silica particles was changed from 120 parts by weight to 180 parts by weight.

### Comparative Example 8

A prepreg was obtained in the same manner in Example 5, except that a phenol biphenyl aralkyl epoxy resin (NC-3000-FH,epoxy equivalent: 320 g/eq., manufactured by Nippon Kayaku Co., Ltd.) was used instead of the polyoxynaphthylene epoxy resin used in Example 5.

### Comparative Example 9

A prepreg was obtained in the same manner in Example 5, except that the addition amount of the spherical fused silica particles used in Comparative Example 8 was changed from 90 parts by weight to 150 parts by weight.

### Comparative Example 10

A prepreg was obtained in the same manner in Example 8, except that a phenol biphenyl aralkyl epoxy resin (NC-3000-FH, epoxy equivalent: 320 g/eq., manufactured by Nippon Kayaku Co., Ltd.) was used instead of the polyoxynaphthylene epoxy resin used in Example 8.

### Comparative Example 11

A prepreg was obtained in the same manner in Example 8, except that a phenol novolak epoxy resin (N770, epoxy equivalent: 190 g/eq., manufactured by DIC) was used instead of the polyoxynaphthylene epoxy resin used in Example 8.

### Comparative Example 12

A prepreg was obtained in the same manner in Example 9, except that a phenol biphenyl aralkyl epoxy resin (NC-3000-FH, epoxy equivalent: 320 g/eq., manufactured by Nippon Kayaku Co., Ltd.) was used instead of the polyoxynaphthylene epoxy resin used in Example 9.

### Comparative Example 13

A prepreg was obtained in the same manner in Example 9, except that a phenol novolak epoxy resin (N770, epoxy equivalent: 190 g/eq., manufactured by DIC) was used instead of the polyoxynaphthylene epoxy resin used in Example 9.

### Comparative Example 14

A prepreg was obtained in the same manner in Example 12, except that the addition amount of the polyoxynaphthylene epoxy resin used in Example 12 was changed from 40 parts by weight to 0 part by weight and the addition amount of the phenol biphenyl aralkyl epoxy resin used in Example 12 was changed from 10 parts by weight to 50 parts by weight.

### Comparative Example 15

A prepreg was obtained in the same manner in Example 12, except that a phenol novolak epoxy resin (N770, epoxy equivalent: 190 g/eq., manufactured by DIC) was used instead of the polyoxynaphthylene epoxy resin used in Example 12.

### Preparation of metal-clad laminated sheet

For each of the prepregs thus obtained, four sheets of the prepreg were superimposed on each other to constitute a stack. A 12 µm-thick electrolytic copper foil (3EC-III, manufactured by MITSUI MINING & SMELTING CO., LTD.) was disposed on the upper surface and the lower surface of the stack, followed by lamination molding under conditions of a pressure of 30 kgf/cm², a temperature of 220°C, and a time of 120 min to obtain a metal-clad laminated sheet having a 0.4 mm-thick insulating layer. In the prepreg of Comparative Example 5, the metal-clad laminated sheet could not be formed by lamination molding.

### Evaluation of metal-clad laminated sheet

Flame retardance, glass transition temperature, coefficient of thermal expansion, and drilling workability were evaluated for the metal-clad laminated sheets thus obtained. The copper foil was removed by etching the metal-clad laminated sheet before the flame retardance, glass transition temperature, and coefficient of thermal expansion were evaluated by the following method.

Flame retardance: evaluated according to a UL94 vertical combustion testing method.

Glass transition temperature: measured with a dynamic viscoelasticity analyzer (manufactured by TA INSTRUMENTS) according to JIS C 6481.

Coefficient of thermal expansion: determined by providing a thermomechanical analyzer (manufactured by TA INSTRUMENTS), raising the temperature from 40°C to 340°C at a temperature rise rate of 10°C/min, and measuring a coefficient of linear expansion in a plane direction from 60°C to 120°C. The measurement direction was a warp direction of the glass cloth in the laminated sheet.

The drilling workability was evaluated in terms of hits of drill bit breakage and accuracy of hole positions under the following drilling conditions.
Machining device: ND-1 V212, manufactured by Hitachi Via Asia Pte. Ltd.
Number of superimposed sheets: four metal foil-clad laminated sheets
Entry sheet: LE400, manufactured by Mitsubishi Gas Chemical Co., Ltd.
Backup board: PS-1160D, manufactured by RISHO KOGYO CO., LTD.
Drill bit: MD MC 0.18x3.3 L508A, manufactured by UNION TOOL CO.
Rotating speed: 160krpm
Feed rate: 0.8 m/min
Hits: 3000

The results of evaluation were as shown in Tables 1 and 2 below.

**Table 1**

| Evaluation item | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Flame retardance | V-0 | V-0 | V-0 | V-0 | V-0 | V-0 | V-0 | V-0 | V-0 | V-0 | V-0 | V-0 |
| Tg (°C) | 251 | 255 | 251 | 249 | 252 | 242 | 252 | 253 | 251 | 240 | 242 | 251 |
| Coefficient of thermal expansion (ppm/°C) | 9.2 | 9.4 | 9.3 | 9.5 | 9.3 | 9.3 | 9.4 | 9.4 | 9.2 | 9.2 | 9.6 | 9.5 |
| Bit breakage | >3000 | >3000 | >3000 | >3000 | >3000 | >3000 | >3000 | >3000 | >3000 | >3000 | >3000 | >3000 |
| Accuracy of hole position (µm) | 35.0 | 35.0 | 35.0 | 25.0 | 30.0 | 35.0 | 35.0 | 35.0 | 25.0 | 30.0 | 30.0 | 25.0 |

**Table 2**

| Evaluation item | Comparative Example | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Flame retardance | V-0 | V-1 | V-1 | Total loss by fire | - | V-0 | V-0 | V-0 | V-0 | V-0 | V-1 | V-0 | V-1 | V-0 | V-1 |
| Tg (°C) | 231 | 242 | 230 | 250 | - | 235 | 232 | 234 | 232 | 234 | 238 | 224 | 229 | 234 | 241 |
| Coefficient of thermal expansion (ppm/°C) | 10.4 | 10.3 | 9.3 | 14.2- | - | 8.5 | 9.5 | 10.3 | 9.4 | 10.5 | 10.4 | 10.6 | 10.5 | 10.2 | 10.4 |
| Bit breakage | >3000 | >3000 | >3000 | >3000 | - | 1245 | 2135 | >3000 | >3000 | >3000 | >3000 | >3000 | >3000 | >3000 | >3000 |
| Accuracy of hole position (µm) | 35.0 | 35.0 | 35.0 | 18.0 | - | 55.0 | 48.0 | 30.0 | 45.0 | 30.0 | 25.0 | 25.0 | 25.0 | 25.0 | 25.0 |

As is also apparent from Tables 1 and 2, the laminated sheets using the prepregs of Examples 1 to 12 exhibited excellent results in terms of flame retardance, glass transition temperature, thermal expansion, bit breakage, and drilling workability (accuracy of hole position), whereas the laminated sheets using the prepregs of Comparative Examples 1 to 15 did not have a good balance among flame retardance, water absorption, heat resistance, and reflow resistance and exhibited poor results in terms of at least one of the above properties.

In particular, for the resin composition of Comparative Example 1, due to the incorporation of a phenol biphenyl aralkyl epoxy resin instead of the polyoxynaphthylene epoxy resin, the coefficient of thermal expansion was high, whereas the glass transition temperature was low. For the resin composition of Comparative Example 2, due to the incorporation of only a phenol novolak epoxy resin instead of the polyoxynaphthylene epoxy resin, the coefficient of thermal expansion was high, whereas the flame retardance was poor.

For the resin composition of Comparative Example 3, due to the absence of the maleimide compound (B), the coefficient of thermal expansion was high, whereas the glass transition temperature was low and, at the same time, the flame retardance was poor. For the resin composition of Comparative Example 4, due to the absence of the inorganic filler (D), the drilling workability (accuracy of hole position) was good, whereas the coefficient of thermal expansion was high and, at the same time, the flame retardance was poor.

For the resin composition of Comparative Example 5 where, instead of the polyoxynaphthylene epoxy resin, an inorganic filler (D) having approximately the same level of coefficient of thermal expansion in approximately the same amount as the polyoxynaphthylene epoxy resin in Example 1 was contained, a laminated sheet could not be formed by molding. On the other hand, for the resin compositions of Comparative Examples 6 and 7 where, as with Comparative Example 5, instead of the polyoxynaphthylene epoxy resin, an inorganic filler (D) having approximately the same level of coefficient of thermal expansion in approximately the same amount as the polyoxynaphthylene epoxy resin was contained, a laminated sheet could be formed by molding. However, the resin compositions of Comparative Examples 6 and 7 had poor drilling workability and moldability.

For the resin composition of Comparative Example 8 where the polyoxynaphthylene epoxy resin was not contained, the coefficient of thermal expansion was higher than that of the resin composition of Example 5. On the other hand, the resin composition of Comparative Example 9 where the amount of the inorganic filler added was increased in order to lower the coefficient of thermal expansion of the resin composition of Comparative Example 8 exhibited approximately the same coefficient of thermal expansion as that of the resin composition of Example 12 but was inferior in accuracy of hole position to the resin composition of Example 12.

The resin composition of Comparative Example 10 was the same as the resin composition of Example 8, except that a phenol biphenyl aralkyl epoxy resin was used instead of the polyoxynaphthylene epoxy resin. The resin composition of Comparative Example 10 had a higher coefficient of thermal expansion and a lower glass transition temperature than the resin composition of Example 8. The resin composition of Comparative Example 11 was the same as the resin composition of Example 8, except that a phenol novolak epoxy resin was used instead of the polyoxynaphthylene epoxy resin. The resin composition of Comparative Example 11 had a higher coefficient of thermal expansion and a lower flame retardance than the resin composition of Example 8. The resin composition of Comparative Example 12 was the same as the resin composition of Example 9, except that a phenol biphenyl aralkyl epoxy resin was used instead of the polyoxynaphthylene epoxy resin. The resin composition of Comparative Example 12 had a higher coefficient of thermal expansion and a lower glass transition temperature than the resin composition of Example 9. The resin composition of Comparative Example 13 was the same as the resin composition of Example 9, except that a phenol novolak epoxy resin was used instead of the polyoxynaphthylene epoxy resin. The resin composition of Comparative Example 13 had a higher coefficient of thermal expansion and a lower flame retardance than the resin composition of Example 9. The resin composition of Comparative Example 14 was the same as the resin composition of Example 12, except that the polyoxynaphthylene epoxy resin was absent and only the phenol biphenyl aralkyl epoxy resin was used. The resin composition of Comparative Example 14 had a higher coefficient of thermal expansion and a lower glass transition temperature than the resin composition of Example 12. The resin composition of Comparative Example 15 was the same as the resin composition of Example 12, except that a phenol novolak epoxy resin was used instead of the polyoxynaphthylene epoxy resin. The resin composition of Comparative Example 15 had a higher coefficient of thermal expansion and a lower flam retardance than the resin composition of Example 12.

As is apparent from the above results, the laminated sheet prepared using the resin composition according to the present invention is advantageous in that, despite the fact that the content of an inorganic filler is on approximately the same level as that of the conventional resins, the coefficient of thermal expansion in a plane direction of the resin cured product is low and, at the same time, the heat resistance and the flame retardance are also excellent.

## Claims

1. A resin composition comprising: an epoxy resin (A); a maleimide compound (B); a curing agent (C); and an inorganic filler (D),
wherein the curing agent (C) comprises a cyanate ester resin (C1),
wherein the cyanate ester resin (C1) is contained in an amount that meets a requirement of CN/Ep of 0.7 to 2.5 wherein CN represents the number of cyanate groups in the cyanate ester resin (C1); and Ep represents the number of epoxy groups in the epoxy resin (A),
wherein the epoxy resin (A) is represented by general formula (IV) or (V): 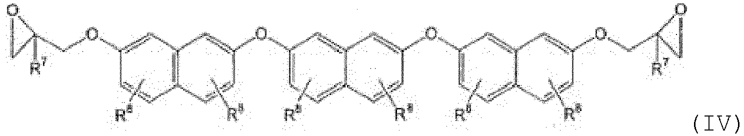 wherein R⁷ represents a hydrogen atom or a methyl group;
and R⁸'s each independently represent a hydrogen atom, an alkyl group having 1 to 4 carbon atoms, or an aralkyl group represented by formula (II); 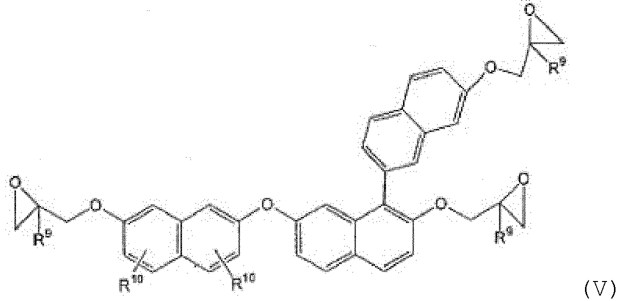 wherein R⁹ represents a hydrogen atom or a methyl group;
and R¹⁰'s each independently represent a hydrogen atom, an alkyl group having 1 to 4 carbon atoms, or an aralkyl group represented by formula (II); 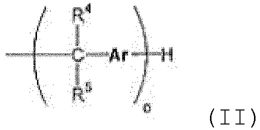 wherein R⁴ and R⁵ each independently represent a hydrogen atom or a methyl group; Ar represents a phenylene or naphthylene group, provided that 1 to 3 hydrogen atoms in the phenylene or naphthylene group are optionally nuclearly substituted by an alkyl group having 1 to 4 carbon atoms; and o represents a real number of 0.1 to 4 on average, and
wherein the epoxy resin (A) is contained in an amount of 5 to 60 parts by weight based on 100 parts by weight in total of the epoxy resin (A), the maleimide compound (B), and the curing agent (C).

2. The resin composition according to claim 1, wherein the cyanate ester resin (C1) is represented by formula (VI): 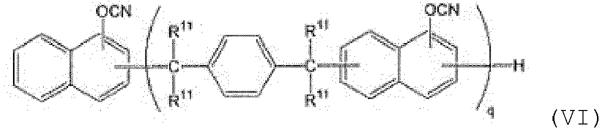 wherein R¹¹ represents a hydrogen atom or a methyl group; and q is an integer of 1 to 10 on average.

3. The resin composition according to claim 1 or 2, wherein the curing agent (C) further comprises a phenolic resin (C2).

4. The resin composition according to claim 3, wherein the phenolic resin (C2) is represented by formula (VII): 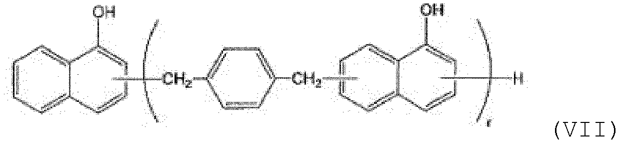 wherein r is an integer of 1 or more.

5. The resin composition according to any one of claims 1 to 4, wherein the maleimide compound (B) is contained in an amount of 3 to 50 parts by weight based on 100 parts by weight in total of the epoxy resin (A), the maleimide compound (B), and the curing agent (C).

6. The resin composition according to claim 3, 4, or 5, wherein the phenolic resin (C2) is contained in an amount that meets a requirement of OH/Ep of 0.7 to 2.5 wherein OH represents the number of phenol groups in the phenolic resin (C2); and Ep represents the number of epoxy groups in the epoxy resin (A).

7. The resin composition according to any one of claims 1 to 6, wherein the inorganic filler (D) is contained in an amount of 50 to 200 parts by weight based on 100 parts by weight in total of the epoxy resin (A), the maleimide compound (B), and the curing agent (C).

8. A prepreg comprising: a base material; and a resin composition according to any one of claims 1 to 7 impregnated into or coated on the base material.

9. A laminated sheet comprising a cured product of a prepreg according to claim 8.

10. A metal foil-clad laminated sheet comprising: a cured product of a stack of a prepreg according to claim 8 and a metal foil provided on the prepreg.

## Patentansprüche

1. Harzzusammensetzung, umfassend: ein Epoxidharz (A), eine Maleimidverbindung (B), ein Härtungsmittel (C) und einen anorganischen Füllstoff (D),
wobei das Härtungsmittel (C) ein Cyanatesterharz (C1) umfasst,
wobei das Cyanatesterharz (C1) in einer Menge enthalten ist, welche das Erfordernis, dass CN/Ep 0,7 bis 2,5 ist, erfüllt, worin CN eine Zahl der Cyanatgruppen in dem Cyanatesterharz (C1) darstellt und Ep die Zahl der Epoxygruppen in dem Epoxidharz (A) darstellt,
wobei das Epoxidharz (A) durch die allgemeine Formel (IV) oder (V) dargestellt ist: 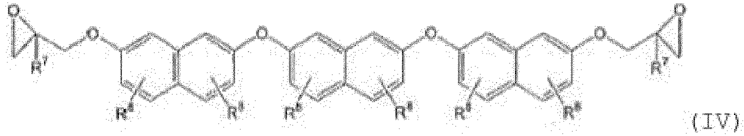 worin R⁷ ein Wasserstoffatom oder eine Methylgruppe darstellt und die R⁸ jeweils unabhängig ein Wasserstoffatom, eine Alkylgruppe mit 1 bis 4 Kohlenstoffatomen oder eine durch Formel (II) dargestellte Aralkylgruppe darstellen, 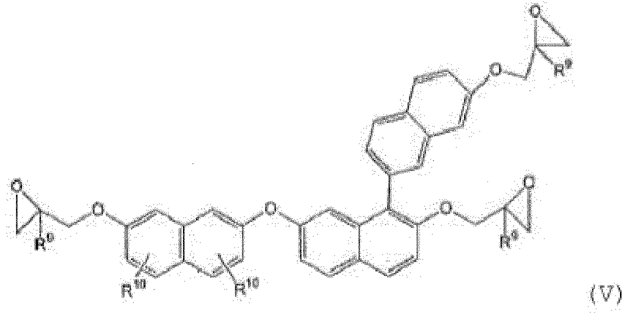 worin R⁹ ein Wasserstoffatom oder eine Methylgruppe darstellt und die R¹⁰ jeweils unabhängig ein Wasserstoffatom, eine Alkylgruppe mit 1 bis 4 Kohlenstoffatomen oder eine durch Formel (II) dargestellte Aralkylgruppe darstellen, 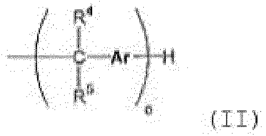 worin R⁴ und R⁵ jeweils unabhängig ein Wasserstoffatom oder eine Methylgruppe darstellen, Ar eine Phenylenoder Naphthylengruppe darstellt, vorausgesetzt, dass 1 bis 3 Wasserstoffatome in der Phenylen- oder Naphthylengruppe gegebenenfalls Kern-substituiert durch eine Alkylgruppe mit 1 bis 4 Kohlenstoffatomen sind, und o eine reelle Zahl von 0,1 bis 4 im Durchschnitt darstellt, und
worin das Epoxidharz (A) in einer Menge von 5 bis 60 Gewichtsteilen, bezogen auf insgesamt 100 Gewichtsteilen des Epoxidharzes (A), der Maleimidverbindung (B) und des Härtungsmittels (C), enthalten ist.

2. Harzzusammensetzung gemäß Anspruch 1, wobei das Cyanatesterharz (C1) durch Formel (VI) dargestellt ist: 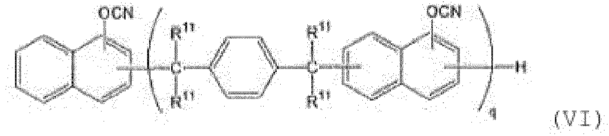 worin R¹¹ ein Wasserstoffatom oder eine Methylgruppe ist und q eine ganze Zahl von 1 bis 10 im Durchschnitt ist.

3. Harzzusammensetzung gemäß Anspruch 1 oder 2, wobei das Härtungsmittel (C) ferner ein Phenolharz (C2) umfasst.

4. Harzzusammensetzung gemäß Anspruch 3, wobei das Phenolharz (C2) durch Formel (VII) dargestellt ist: 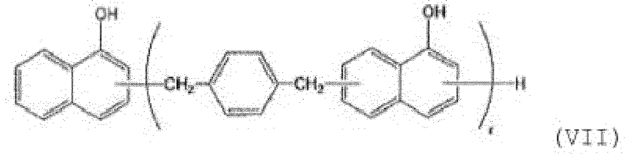 worin r eine ganze Zahl von 1 oder höher ist.

5. Harzzusammensetzung gemäß irgendeinem der Ansprüche 1 bis 4, wobei die Maleimidverbindung (B) in einer Menge von 3 bis 50 Gewichtsteilen, bezogen auf insgesamt 100 Gewichtsteile des Epoxidharzes (A), der Maleimidverbindung (B) und des Härtungsmittels (C), enthalten ist.

6. Harzzusammensetzung gemäß Anspruch 3, 4 oder 5, wobei das Phenolharz (C2) in einer Menge enthalten ist, die das Erfordernis, dass OH/Ep 0,7 bis 2,5 ist, erfüllt, wobei OH die Zahl der Phenolgruppen in dem Phenolharz (C2) darstellt und Ep die Zahl der Epoxygruppen in dem Epoxidharz (A) darstellt.

7. Harzzusammensetzung gemäß irgendeinem der Ansprüche 1 bis 6, wobei der anorganische Füllstoff (D) in einer Menge von 50 bis 200 Gewichtsteilen, bezogen auf insgesamt 100 Gewichtsteile des Epoxidharzes (A), der Maleimidverbindung (B) und des Härtungsmittels (C), enthalten ist.

8. Prepreg, umfassend: ein Basismaterial und eine Harzzusammensetzung gemäß irgendeinem der Ansprüche 1 bis 7, die in das Basismaterial imprägniert ist oder darauf beschichtet ist.

9. Laminatplatte, umfassend ein gehärtetes Produkt aus dem Prepreg gemäß Anspruch 8.

10. Metallfolien-kaschierte Laminatplatte, umfassend: ein gehärtetes Produkt eines Stapels aus einem Prepreg gemäß Anspruch 8 und einer auf dem Prepreg angeordneten Metallfolie.

## Revendications

1. Composition de résine comprenant: une résine époxy (A) ; un composé de maléimide (B) ; un agent de durcissement (C) ; et une charge inorganique (D),
dans laquelle l'agent de durcissement (C) comprend une résine d'ester de cyanate (C1),
dans laquelle la résine d'ester de cyanate (C1) est présente en une quantité qui répond à l'exigence du CN/Ep allant de 0,7 à 2,5 dans laquelle CN représente le nombre de groupes cyanate dans la résine d'ester cyanate (C1) ; et Ep représente le nombre de groupes époxy dans la résine époxy (A),
dans laquelle la résine époxy (A) est représentée par la formule générale (IV) ou (V) : 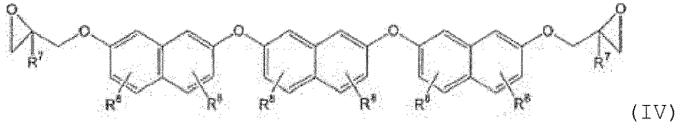 dans laquelle R⁷ représente un atome d'hydrogène ou un groupe méthyle ; et les R⁸ représentent chacun indépendamment un atome d'hydrogène, un groupe alkyle présentant de 1 à 4 atomes de carbone, ou un groupe aralkyle représenté par la formule (II) ; 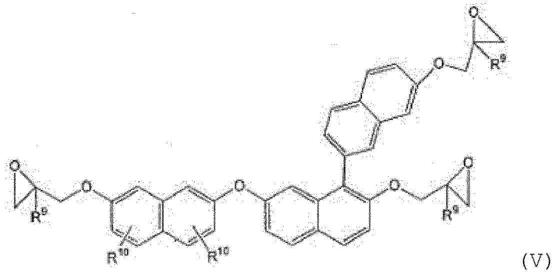 dans laquelle R⁹ représente un atome d'hydrogène ou un groupe méthyle ; et les R¹⁰ représentent chacun indépendamment un atome d'hydrogène, un groupe alkyle présentant de 1 à 4 atomes de carbone, ou un groupe aralkyle représenté par la formule (II) ; 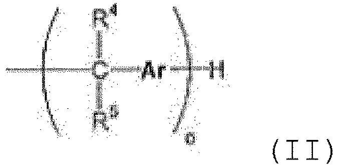 dans laquelle R⁴ et R⁵ représentent chacun indépendamment un atome d'hydrogène ou un groupe méthyle ; Ar représente un groupe phényle ou naphtylène, à condition que 1 à 3 atomes d'hydrogène du groupe phénylène ou naphtylène sont facultativement substitués nucléairement par un groupe alkyle présentant de 1 à 4 atomes de carbone ; et o représente un nombre réel allant de 0,1 à 4 en moyenne, et
dans laquelle la résine époxy (A) est présente en une quantité allant de 5 à 60 parties en poids sur la base de 100 parties en poids au total de la résine époxy (A), le composé de maléimide (B), et l'agent de durcissement (C).

2. Composition de résine selon la revendication 1, dans laquelle la résine d'ester de cyanate (C1) est représentée par la formule (VI) : 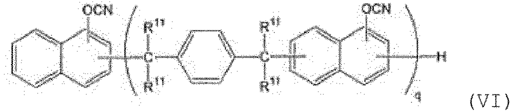 dans laquelle R¹¹ représente un atome d'hydrogène ou un groupe méthyle ; et q est un nombre entier allant de 1 à 10 en moyenne.

3. Composition de résine selon la revendication 1 ou 2, dans laquelle l'agent de durcissement (C) comprend en outre une résine phénolique (C2).

4. Composition de résine selon la revendication 3, dans laquelle la résine phénolique (C2) est représentée par la formule (VII) : 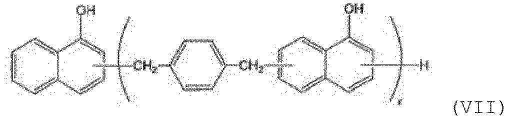 dans laquelle r est un nombre entier supérieur ou égal à 1.

5. Composition de résine selon l'une quelconque des revendications 1 à 4, dans laquelle le composé de maléimide (B) est présent en une quantité allant de 3 à 50 parties en poids sur la base de 100 parties en poids au total de la résine époxy (A), du composé de maléimide (B), et de l'agent de durcissement (C).

6. Composition de résine selon la revendication 3, 4 ou 5, dans laquelle la résine phénolique (C2) est présente en une quantité qui répond à l'exigence du OH/Ep allant de 0,7 à 2,5 dans laquelle OH représente le nombre de groupes phénol de la résine phénolique (C2) ; et Ep représente le nombre de groupes époxy dans la résine époxy (A).

7. Composition de résine selon l'une quelconque des revendications 1 à 6, dans laquelle la charge inorganique (D) est présente en une quantité allant de 50 à 200 parties en poids sur la base de 100 parties en poids au total de la résine époxy (A), du composé de maléimide (B), et de l'agent de durcissement (C).

8. Préimprégné comprenant : un matériau de base ; et une composition de résine selon l'une quelconque des revendications 1 à 7 imprégnée dans ou appliquée sur le matériau de base.

9. Plaque stratifiée comprenant un produit durci d'un préimprégné selon la revendication 8.

10. Plaque stratifiée recouverte d'une feuille métallique comprenant : un produit durci d'un empilement d'un préimprégné selon la revendication 8 et une feuille métallique disposée sur le préimprégné.
